## Europäisches Patentamt
## European Patent Office
## Office européen des brevets

(19)

(11) Numéro de publication: **0 130 131**
**B1**

(12)

# FASCICULE DE BREVET EUROPÉEN

(45) Date de publication du fascicule du brevet:
16.03.88

(51) Int. Cl.⁴: **G 06 K 11/02**

(21) Numéro de dépôt: **84401358.1**

(22) Date de dépôt: **26.06.84**

(54) Système de relevé de plans.

(30) Priorité: **28.06.83 FR 8310663**

(43) Date de publication de la demande:
**02.01.85 Bulletin 85/1**

(45) Mention de la délivrance du brevet:
**16.03.88 Bulletin 88/11**

(84) Etats contractants désignés:
**CH DE GB IT LI**

(56) Documents cité:
**EP-A-0 080 294**
**DE-A-2 026 784**
**GB-A-2 000 865**

**ELEKTRONIK, volume 29, no. 13, juin 1980 (MUNICH, DE) Dr. H.J. NEUKIRCHEN: "Ein vollautomatischer Kurvenabtaster", pages 44-46,59 COMP. GRAPH. & IMAGE PROC., volume 9, no. 2, février 1979, (NEW YORK, US) M. BERTHOD et al.: "Learning in syntactic recognition of symbols drawn on a graphic tablet", pages 166-182 AUTOMATISME, tome XVII, nos. 1,2, janvier-février 1972; A. LEMAITRE et al.: "Un nouveau moyen d'acquisition de données: "Le courbogyre", lecteur de courbe automatique", pages 22-25**

(73) Titulaire: **COMMISSARIAT A L'ENERGIE ATOMIQUE, 31/33, rue de la Fédération, F-75015 Paris (FR)**

(72) Inventeur: **Andriamampianina, Lala, 6 Lalana Ramanda Antanimena, 101 Antananarivo (MG)**
Inventeur: **Basire, Alain, 4, rue de Fontenay, F-78000 Versailles (FR)**
Inventeur: **Dupeyrat, Benoît, 5, Square Montpensier, F-91380 Chilly- Mazarin (FR)**

(74) Mandataire: **Mongrédien, André, c/o BREVATOME 25, rue de Ponthieu, F-75008 Paris (FR)**

## Description

La présente invention a pour objet un système de relevé de plans. Par plan on entend un dessin constitué d'un ensemble de lignes contrastées (sombres sur fond clair ou inversement). L'invention peut être avantageusement utilisée pour le relevé des dessins de pièces mécaniques, de plans d'architecture ou de plans cadastraux, de schémas électriques, de schémas de circuits logiques ou de circuits intégrés.

Les systèmes de relevé de plans connus sont répartis en deux groupes: les systèmes manuels et les systèmes automatiques. Dans les systèmes manuels, le relevé de plans se fait de la manière suivante.

Le plan est disposé sur une tablette graphique. Pour relever un dessin, l'utilisateur doit donc déplacer manuellement un curseur sur chacune des lignes du dessin, la tablette graphique comprenant des moyens électroniques pour déterminer la position du centre du curseur à chaque instant et pour échantillonner cette position à des intervalles de temps prédéterminés. Ce système de relevé a plusieurs inconvénients. D'un, part, cela demande de la part de l'utilisateur un effort important pour suivre avec précision chaque ligne du dessin. D'autre part, l'échantillonnage se faisant à des intervalles de temps prédéterminés, en l'absence de commande d'échantillonnage manuel par l'utilisateur, l'utilisateur doit moduler la vitesse de déplacement du curseur en fonction de la courbe suivie. En effet, s'il parcourt trop rapidement un arc de cercle, celui-ci est échantillonné par un nombre insuffisant de points et l'arc de cercle est approximé grossièrement par des segments de droite.

On connaît par ailleurs des systèmes automatiques de relevé de plans. Ces systèmes utilisent les techniques classiques de traitement d'images et fonctionnent en trois étapes: numérisation de l'image, pre-traitement et reconnaissance des lignes. Une telle démarche nécessite donc un système électronique muni de moyens de mémorisation importants, typiquement de l'ordre de 256 000 points d'image (512 x 512). Un inconvénient important de ce système automatique est que le relevé d'un plan est long; le système est "aveugle", il doit donc balayer toute l'image à la recherche des lignes du plan.

Il peut être remédié aux inconvénients cités en adoptant une démarche intermédiaire entre les systèmes à traitement d'images et les systèmes à suivi manuel.

Un tel système comprend un capteur apte à suivre les lignes du plan, comme le curseur manipulé par la main de l'utilisateur dans les systèmes manuels. Par rapport aux systèmes manuels, le capteur se déplace avec une plus grande précision. Par rapport aux systèmes à traitement d'images, le relevé de plans s'effectue par un capteur suivant automatiquement les lignes en se déplaçant au-dessus de ce plan; il n'y a pas lieu de mémoriser une image englobant ce plan, ce qui allège le système.

On connaît notamment par le document GB-A-2 000 865 un système de relevé de plans, du genre de ceux comprenant une table munie d'un capteur formé de N éléments photosensibles, un état dudit capteur étant défini par l'état des éléments photosensibles, d'un moyen pour déplacer le capteur dans un plan parallèle à la table selon deux axes perpendiculaires, et de moyens pour mémoriser et transmettre la position du capteuret son état, ladite table recevant un plan à relever constitué d'un ou plusieurs dessins connexes, ledit système comprenant également :

- un moyen de suivi d'une ligne d'un dessin délivrant, au vu de l'état du capteur, des signaux au moyens de déplacement du capteur de manière à centrer ledit capteur sur la ligne suivie,
- un moyen d'analyse pour détecter, au vu de l'état du capteur, les intersections de ligne rencontrées par le capteur et reconnaître lesdites intersections,
- un moyen d'échantillonnage pour mémoriser, selon un critère prédéterminé, les coordonnées de points des lignes de dessin suivies,
- un moyen de commande apte à effectuer des déplacements successifs du capteur d'un pas prédéterminé dans la direction de la ligne suivie, apte à activer successivement, après chaque déplacement du capteur, le moyen de suivi de ligne, le moyen d'analyse et le moyen d'échantillonnage, ledit moyen de commande recevant en outre du moyen d'analyse les caractéristiques des lignes reconnues aux intersections et étant apte à commander au capteur de suivre successivement toutes les lignes d'un dessin connexe, des moyens extérieurs au système déplaçant le capteur d'un dessin connexe à un autre dessin connexe.

Un système de relevé de plans permettant de suivre successivement toutes les lignes d'un dessin connexe est également décrit dans le document DE-A-2 026 784.

L'invention se rapporte à un système de relevés de plans qui se distingue des systèmes de relevés de plans connus en ce que le moyen d'analyse reconnaît des intersections en comparant l'état du capteur à des configurations type et en ce que le moyen de suivi de ligne est apte, lorsque deux groupes disjoints d'éléments photosensibles sont éteints, à déterminer les angles entre les rayons issus du centre du capteur et passant par le milieu de chacun desdits groupes et une direction de référence, à déterminer la pente de la ligne suivie et à commander un déplacement du capteur, perpendicularement à cette pente, le centrer sur la ligne suivie.

L'invention apparaîtra mieux à la lecture de la description qui va suivre, donnée à titre purement illustratif et nullement limitatif, en référence aux dessins annexés, dans lesquels:

- la figure 1 représente schématiquement un synoptique du système selon l'invention,

2

- la figure 2 représente une vue schématique en coupe du dispositif de la table traçante utilisée dans le système selon l'invention,

- la figure 3 illustre l'action du moyen de suivi d'une ligne du système selon l'invention,

- les figures 4a à 4d illustrent l'action du moyen d'analyse d'une intersection du système selon l'invention,

- la figure 5 illustre l'action du moyen d'échantillonnage du système selon l'invention,

- la figure 6a représente un exemple de plan constitué d'un seul dessin connexe,

- la figure 6b est une arborescence illustrant un ordre de parcours possible des lignes du plan de la figure 6a,

- la figure 7 est un exemple de plan non connexe.

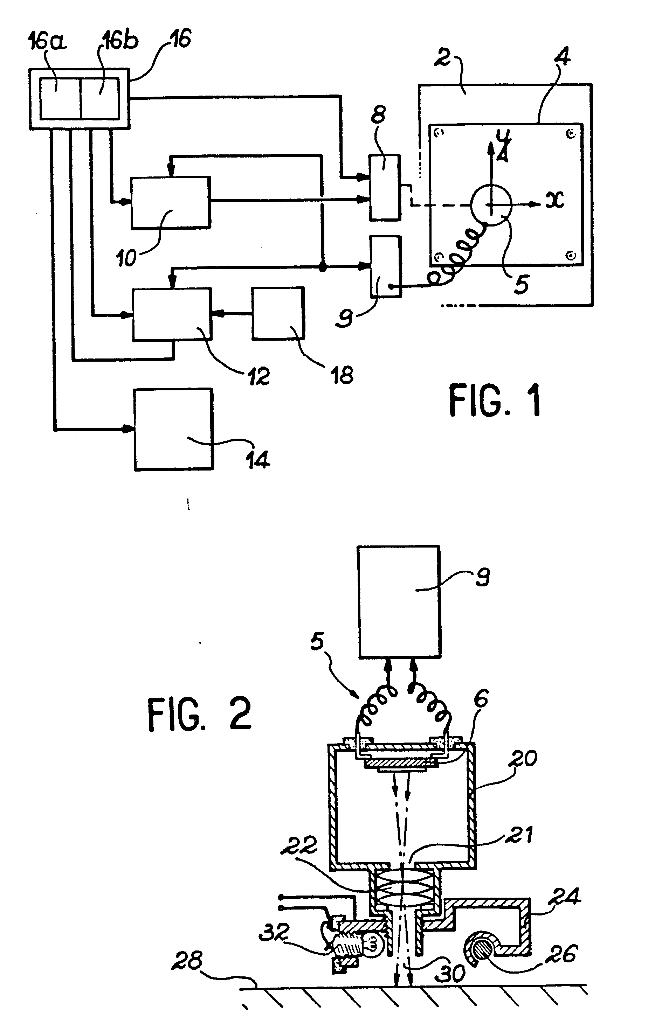

On a représenté sur la figure 1 un synoptique du système selon l'invention. Il comprend d'une part un ensemble constitué d'une table 2 recevant un plan à relever 4, d'un capteur 5, de moyens de déplacement du capteur 6 et de moyens de transmission de l'état du capteur 9 et, d'autre part, d'un ensemble de traitement comprenant un moyen de suivi d'une ligne 10, un moyen d'analyse 12, d'un moyen d'échantillonnage 14 et d'un moyen de commande 16.

La table 2 est par exemple le plan d'une table traçante dont la plume a été remplacée par le capteur 5. Ce capteur est constitué d'éléments photosensibles dont l'état dépend de la présence ou de l'absence d'une ligne de dessin à la verticale de cet élément photosensible. Le capteur est déplacé par un moyen de suivie 10 ou le moyen de commande 16. Un moyen de transmission 9 de l'état des éléments photosensibles du capteur transmet au moyen de suivie d'une ligne 10 et au moyen d'analyse 12 l'état de chacun de ces éléments photosensibles du capteur.

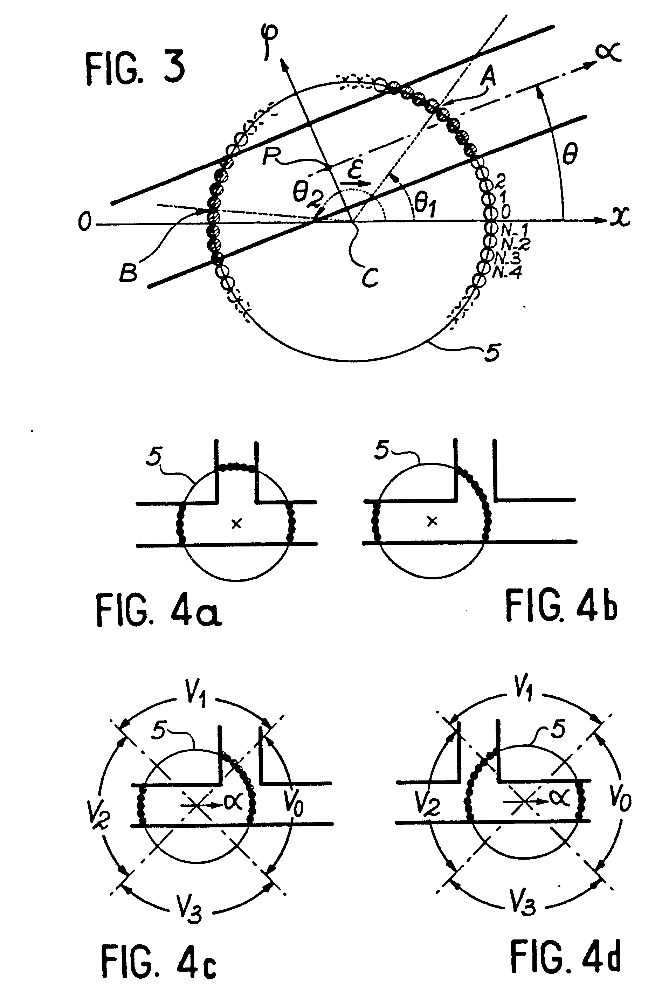

Le moyen 10 de suivi d'une ligne (décrit en détail en référence à la figure 3) est activé par le moyen de commande 16. Sur réception de ce signal d'activation, il analyse l'état des éléments photosensibles du capteur tel qu'il est transmis par le moyen 9, afin de commander le déplacement du capteur de manière à centrer ledit capteur sur la ligne suivie. Le moyen d'analyse 12, également activé par un signal issu du moyen de commande 16, reçoit également l'état des éléments photosensibles du capteur par le moyen 9. Il reconnaît, en analysant cet état, si une nouvelle ligne de dessin, au moins, naît de la ligne suivie par le capteur. Si tel est le cas, le moyen d'analyse 12 effectue un traitement (qui sera détaillé en référence) aux figures 4a à 4d) qui consiste à comparer des signaux indiquant l'état du capteur à des signaux types issus d'un moyen 18. Lorsque la naissance d'une nouvelle ligne de dessin est affirmée, cette ligne est mémorisée dans le moyen de commande 16.

Le moyen 10 et le moyen 12 permettent donc, en combinaison avec le moyen 16, de parcourir l'ensemble des lignes du dessin. Ceci constitue l'une des tâches du relevé de plan. L'autre tâche est l'échantillonnage des lignes reconnues, de manière à ne mémoriser le dessin qu'au moyen d'un ensemble limité de points. Dans le cas d'une ligne droite par exemple, le extrémités des segments de cette droite suffisent à la définir.

Le moyen de commande 16 comprend un sous-ensemble de traitement 16a et un sous-ensemble de mémorisation 16b. Le sous-ensemble de traitement 16a a notamment pour fonction de commander le déplacement du capteur d'un pas déterminé dans la direction de la ligne suivie par le capteur; il a aussi pour fonction d'activer successivement, après chaque déplacement du capteur, le moyen 10 de suivi d'une ligne de dessin, le moyen 12 d'analyse des intersections et le moyen 14 d'échantillonnage.

Le moyen de commande 16 reçoit du moyen d'analyse 12 des signaux définissant les lignes nouvelles rencontrées aux points d'intersection reconnus par le moyen d'analyse 12. Ces nouvelles lignes sont mémorisées par l'ensemble de mémorisation du moyen de commande 16. Le sous-ensemble de traitement 16a de ce moyen de commande, lorsqu'il est avisé que la ligne en cours suivie par le capteur est terminée, choisit une autre ligne à suivre parmi les lignes mémorisées et commande le déplacement du capteur 5 vers le début de cette ligne.

Le système de relevé de plans de l'invention est donc apte, grâce au moyen de commande 16, à parcourir toutes les lignes d'un dessin connexe en ne parcourant chaque ligne qu'une fois et une seule. Lorsque toutes les lignes d'un dessin connexe ont été suivies et échantillonnées, le système fait appel à l'utilisateur pour positionner le capteur sur une ligne d'un autre dessin du plan.

Ainsi, l'intervention de l'utilisateur est limitée au positionnement du capteur sur une ligne d'un dessin connexe non encore échantillonné, ceci afin de limiter le temps de saisie d'un plan en éliminant le balayage, coûteux en temps, qui serait nécessaire en l'absence d'interventions humaines pour faire passer le système de l'analyse d'un dessin connexe à l'analyse d'un autre dessin connexe.

Différents types de capteurs sont utilisés pour suivre une ligne de dessin. Certains systèmes connus utilisent des caméras de télévision ou bien des réseaux linéaires ou matriciels d'éléments photosensibles. Le premier type de capteur a pour inconvénient un poids important, ce qui rend une manipulation délicate et le second type de capteur délivre un volume d'informations simultané qui n'est pas nécessaire pour suivre une ligne et qui ne fait qu'augmenter les difficultés de traitement. On a préféré utiliser, dans le système selon l'invention, un réseau circulaire, c'est-à dire un réseau où les éléments photosensibles sont disposés sur la circonférence d'un cercle. Ce type de capteur présente plusieurs avantages parmi lesquels on peut noter son isotropie, en raison de sa géométrie, et son faible encombrement qui facilite son positionnement, par exemple sur le bras d'une table traçante. A titre d'exemple, ce capteur peut comprendre 64 éléments photosensibles pour un diamètre de 0,2 mm.

On a représenté sur la figure 2, en vue de coupe, le dispositif optique comprenant le capteur. Le capteur 5 comportant les éléments photosensibles est enfermé dans un boîtier 20 comportant à son extrémité inférieure un orifice ou une sone transparente 21. Un ou plusieurs objectifs 22 permettent de limiter la largeur du faisceau lumineux 30 reçu par chaque élément photosensible du capteur 5. L'ensemble boîtier 20 et objectif 22 est fixé au porte-plume 24 de la table traçantee. Un dispositif d'éclairage 32 est adjoint au dispositif optique. L'axe 26 représenté en coupe est un rail permettant un déplacement du dispositif optique selon une direction perpendiculaire au plan de la figure 2 et parallèle au plan 28 portant le dessin. D'autres moyens (non représentés), et qui peuvent être par exemple disposés à chaque extrémité de cet axe 26, permettent un déplacement du dispositif optique selon une direction perpendiculaire à l'axe 26 et parallèle au plan 28.

Il peut être intéressant d'utiliser des objectifs 22 qui peuvent être déplacés, selon leur axe, par exemple sur réception d'un signal reçu du moyen de commande 16 (figure 1) de manière à faire varier la surface du plan vu par chaque élément photosensible. Il est ainsi possible d'adapter le dispositifs optique, en fonction de la largeur des traits du dessin.

On va maintenant décrire en détail l'action de chacun des moyens du système selon l'invention. La figure 3 permet d'illustrer l'action du moyen de suivi d'une ligne.

En suivant une ligne, le capteur, dont l'orientation des éléments photosensibles est fixe, indique d'une part l'angle $\theta$ que fait l'image de la ligne sur le capteur par rapport à un axe Ox définissant une direction de référence; il indique aussi les coordonnées $X_c$ et $Y_c$ du centre C du capteur. La détermination de la ligne par rapport au capteur se fait simplement en lisant l'état des éléments photosensibles. Il est ainsi possible de déterminer l'angle $\theta_1$ que fait la direction Ox avec le rayon CA, où A est le point central de la bande des éléments photosensibles éteints (c'est-à-dire situés au-dessus de la ligne). De même, on peut calculer la valeur $\theta_2$ de l'angle défini par l'axe de référence Ox et le rayon CB où B est le point central de la deuxième bande où les éléments photosensibles sont éteints. Pour centrer le capteur sur la ligne, il suffit de le déplacer selon la direction $\varphi$ formant un angle $(\theta_1 + \theta_2)/2$ avec la direction de référence Ox. Le pas du déplacement correspond à la distance CP où P est le milieu du segment AB, ce pas de déplacement ne dépendant que des angles $\theta_1$ et $\theta_2$ ainsi que du rayon du capteur.

Lorsque le moyen de suivi d'une ligne a déplacé le capteur de telle sorte que le point C soit confondu avec le point P, le moyen de commande 16 (figure 1) active le moyen d'analyse 12. Il active ensuite éventuellement le moyen d'échantillonnage 14 en vue de mémoriser les coordonnées du point P. Après cela, il commande un déplacement du capteur d'un pas prédéterminé dans la direction $\alpha$, direction du segment AB et sensiblement tangente en P à la ligne suivie. A la suite de ce déplacement, le capteur se retrouve dans une position décentrée analogue à celle de la figure 3, la distance entre les points C et P dépendant notamment de la précision de la direction des déplacements du capteur et du type de la ligne suivie (droite, arc de cercle, ...).

Après l'action du moyen de suivi de ligne, le moyen de commande 16 (figure 1) active le moyen d'analyse 12. On va maintenant décrire, en référence aux figures 4a à 4d, l'action de ce moyen d'analyse.

Le moyen d'analyse a deux fonctions: premièrement, il doit reconnaître si le capteur rencontre une intersection et deuxièmement, si c'est le cas, il doit déterminer le lieu de cette intersection et mémoriser les caractéristiques de la droite naissant en cette intersection.

La reconnaissance d'une intersection est effectuée au vu des éléments photosensibles du capteur 5. Les figures 4a et 4b illustrent deux cas où le moyen d'analyse reconnaît une intersection. Sur ces deux figures, on a représenté uniquement les éléments photosensibles éteints, c'est-à-dire se trouvant à la verticale du point d'une ligne de dessin. Sur la figure 4a, les éléments photosensibles éteints sont réunis en trois groupes disjoints. Trois segments de droite traversent le capteur: il y a une intersection. Notons que dans le cas de deux lignes de dessin se croisant, le nombre d'images (c'est-à-dire le nombre de groupes d'éléments photosensibles éteints) est égal à quatre. D'une manière générale, le moyen d'analyse reconnaît donc une intersection si le nombre d'images est au moins égal à trois.

De même, le moyen d'analyse reconnaîtra une intersection lorsqu'il n'y aura que deux images, mais que l'une d'elles est particulièrement large. En effet, comme on l'a réprésenté sur les figures 4a et 4b, si l'image d'une ligne de dessin est un groupe d'environ quatre éléments photosensibles éteints, une image plus large correspond à la naissance d'une intersection.

Une intersection ayant été détectée, il importe maintenant de déterminer le lieu de cette inetersection et les caractéristiques de la droite (ou des droites) naissant en cette intersection. Les figures 4c et 4d illustrent un moyen de détermination de ces intersections.

Le capteur 5 est divisé en quatre quadrants, et donc les éléments photosensibles sont regroupés en quatre groupes notés $V_0$, $V_1$, $V_2$ et $V_3$. Les quadrants $V_0$ et $V_2$ sont centrés sur la direction $\alpha$ de la ligne suivie. Le moyen d'analyse effectue un balayage de part et d'autre de l'intersection, en suivant la direction $\alpha$.

A chaque instant, on calcule le nombre d'éléments photosensibles éteints du quadrant $V_0$. Ce nombre est au début égal au nombre d'éléments photosensibles recouvrant la ligne suivie. Il croit ensuite au fur et à mesure que l'on pénètre dans l'intersection, puis décroît à nouveau jusqu'au nombre d'éléments photosensibles recouvrant la ligne suivie. La figure 4c illustre l'instant où le nombre d'éléments photosensibles éteints du quadrant $V_0$ est maximal. On mesure à cet instant les coordonnées du centre du capteur.

Au cours de ce même balayage, on relève le nombre d'éléments photosensibles éteints dans le quadrant $V_2$. A l'instant où ce nombre est maximum, tel qu'il est représenté sur la figure 4d, on relève les coordonnées du centre du capteur.

Les coordonnées du point d'intersection sont alors simplement données par la moyenne arithmétique des coordonnées du centre du capteur qui ont été relevées au maximum de $V_0$ et au maximum de $V_2$.

La détermination des caractéristiques de la droite, ou des droites, apparaissant en cette intersection est réalisée de la manière suivante. On recueille le signal indiquant l'état du capteur au cours du balayage de l'intersection. Ce signal est ensuite comparé à des configurations de référence correspondant à des intersections types. Les caractéristiques de la droite, ou des droites, détectées sont alors mémorisées par le moyen de commande (figure 1) en vue de l'échantillonnage ultérieur de cette droite, ou de ces droites.

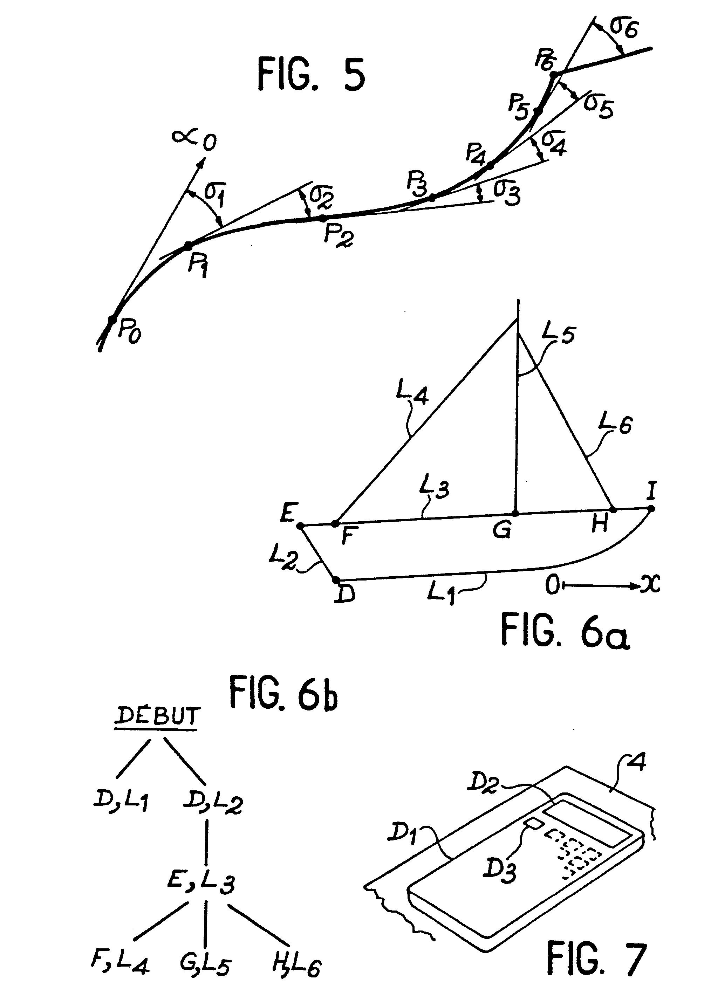

Nous avons décrit jusqu'à point les moyens permettant de suivre une ligne quelconque d'un plan à relever. Le relevé effectif consiste à mémoriser des informations suffisantes pour la restitution de ce plan. Ce relevé est réalisé par un moyen d'échantillonnage 14 activé par le moyen de commande 16 (figure 1). Selon un mode préféré de réalisation du système selon l'invention, le moyen d'échantillonnage 14 effectue un relevé basé sur la segmentation angulaire. La figure 5 illustre l'action de ce moyen d'échantillonnage.

L'échantillonnage est basé sur des propriétés simples de géométrie exploitant l'isotropie du réseau circulaire. Un point de la ligne suivie est échantillonné lorsque l'angle formé par la tangente à la ligne en ce point et la tangente à la ligne au dernier point échantillonné est supérieure ou égale à un angle prédéterminé $\sigma$ appelé angle de segmentation. La valeur de cet angle prédéterminé est liée au nombre d'éléments photosensibles constituant le réseau circulaire. Il est égal à l'écart angulaire minimum décelable par le réseau. Dans le cas par exemple où le capteur comprend 64 éléments photosensibles, l'angle de segmentation sera de $\frac{\pi}{32}$. Partant d'un point échantillonné $P_0$, dont on connaît la tangente $\alpha_0$ à la ligne de dessin, on recherche le prochain point de suivi qui donne un écart angulaire supérieur ou égal à $\sigma$ entre la tangente en ce point et la tangente en $P_0$. Trois cas peuvent se présenter:

1) le point relevé appartient à une intersection. On fait alors appel au moyen d'analyse et on échantillonne le point d'intersection,

2) c'est un point de la ligne de suivi qui est à échantillonner. On détermine la direction de la tangente en ce point,

3) la ligne de dessin suivi présente un défaut, par exemple pression de la plume non constante pendant le tracé, plume mal tenue, bavure,... Par balayage du capteur, comme dans le cas de l'analyse d'une intersection, on reconnaîtra que la ligne présente un défaut et le point correspondant ne sera pas enregistré.

La figure 5 illustre l'échantillonnage d'une ligne. Partant d'un point $P_0$, dont la tangente a une direction $\alpha_0$, on déplace le capteur le long de la ligne en déterminant à chaque instant l'angle que fait la tangente au point courant avec la direction $\alpha_0$. Lorsque cet angle devient égal ou supérieur à l'angle de segmentation $\sigma$, le point courant est échantillonné. Ainsi, la courbe représentée sur la figure est échantillonné par les points $P_0$, $P_1$, $P_2$, $P_3$, $P_4$, $P_5$ et $P_6$. Les angles $\sigma_1$, $\sigma_2$, $\sigma_3$, $\sigma_4$ et $\sigma_5$ sont respectivement égaux à $\sigma$. Par contre, l'angle $\sigma_6$, est supérieur à $\sigma$. Ceci indique que la ligne suivie a rencontré une intersection. Le moyen d'analyse permet de déterminer les coordonnées de ce point d'intersection $P_6$.

La méthode de segmentation angulaire est intéressante en ce qu'elle ne nécessite pas une connaissance d'une partie de la ligne suivie ou de toutes les lignes suivies. De plus, cette méthode permet un relevé de plans ne comportant que peu de calculs. Par ailleurs, cette méthode basée sur la courbure d'une ligne, permet une fréquence d'échantillonnage adaptative. Dans les parties de faible courbure, eu de points sont échantillonnés, par exemple une courbe pratiquement rectiligne, et dans les parties de forte courbure les points échantillonnés sont plus nombreux, par exemple un cercle de faible rayon.

Selon un mode avantageux de réalisation du système selon l'invention, et en vue de limiter le volume d'informations nécessaire pour mémoriser un plan, le système comprend un moyen apte à reconnaître si une suite de points échantillonnés correspond à un arc de cercle. Un arc de cercle peut par exemple être reconnu si les longueurs des segments consécutifs joignant deux points échantillonnés consécutifs sont sensiblement de même longueur. On peut alors remplacer les nombreux points échantillonnés correspondant à ces arcs de cercle par quelques données telles que le rayon du cercle, son centre et l'ouverture de l'arc.

Le suivi d'une ligne quelconque et l'échantillonnage de cette ligne ayant été décrits, on va maintenant décrire une méthode particulière de parcours des différentes lignes d'un dessin connexe.

Une représentation structurelle sous forme d'arborescence, représentée sur la figure 6b, peut être obtenue à partir du suivi des lignes connexes du dessin 6a. La racine de l'arbre correspond au point de départ. Chaque noeud de l'arbre indique une ligne et son point de départ. Les fils d'un noeud correspondent aux lignes rencontrées lors du suivi de la ligne de ce noeud.

Le capteur étant positionné en D, le système reconnaît une intersection et memorise les caractéristiques (pente et point de départ) des lignes $L_1$ et $L_2$. Ces lignes sont parcourues dans un ordre prédéterminé, par exemple on parcourt d'abord la ligne faisant le plus petit angle avec une direction prédéterminée Ox.

Suivons par exemple la ligne $L_1$. Pour ne pas mémoriser et suivre deux fois la ligne $L_3$, détectée au point I en fin de ligne $L_1$ et détectée en E en fin de ligne $L_2$, on décide de ne mémoriser la droite rencontrée à l'intersection que si sa direction est contenue dans un certain demi-plan. Par exemple, si on ne mémorise que les droites dont la direction par rapport à une direction de référence Ox est comprise dans l'intervalle $[0,\pi[$, la ligne $L_3$ n'est pas mémorisée lorsque le capteur la détecte au point I, mais il la mémorise lorsqu'il la détecte au point E.

Le système ayant suivi la ligne $L_2$ jusqu'en I, le moyen de commande repositionne le capteur en D, afin de suivre la ligne $L_2$. Arrivé en E, le capteur détecte la ligne $L_3$ et la mémorise. Au cours du suivi de cette ligne $L_3$, le système détecte successivement aux points F, G et H les lignes $L_4$, $L_5$ et $L_6$. La direction de ces lignes faisant un angle compris dans l'intervalle $[0,\pi[$ avec la direction de référence, ces lignes sont mémorisées. Lorsque le capteur arrive en fin de ligne $L_3$ au point I, le moyen de commande déplace le capteur jusqu'au point F afin de suivre la ligne $L_4$. En fin de ligne $L_4$, le capteur est à nouveau déplacé jusqu'au point G pour suivre la ligne $L_5$, puis en H, pour suivre la ligne $L_6$.

Le capteur étant positionné manuellement en un point d'un dessin connexe, le système effectue donc ensuite le relevé de ce dessin de manière complètement autonome.

Dans un plan comprenant plusieurs dessinsconnexes, tels que représentés sur la figure 7, le relevé se fait de la manière suivante. L'utilisateur positionne le capteur en un point d'un dessin connexe $D_1$ du plan. Lorsque chacune des lignes de ce dessin a été échantillonnée, l'utilisateur déplace alors manuellement le capteur sur un point d'un dessin connexe $D_2$. Le système échantillonne automatiquement ce dessin, puis l'utilisateur déplace le capteur sur un point du dessin connexe $D_3$, qui est alors échantillonné par le système. L'intervention de l'utilisateur est donc limité aux déplacements du capteur d'un dessin connexe à un autre. Cette intervention permet un gain de temps dans le relevé d'un plan en éliminant les balayages du capteur du système à la recherche d'un dessin connexe à échantillonner.

Les figures 6b et 7 représentent des types de dessins ou de plans particulièrement simples en ce sens qu'ils ne sont constitués que d'un seul type de traits. En général, les plans comprennent d'autres types de traits tels que des hachures ou des traits mixtes ou interrompus. Ils comprennent également des côtes ou des références.

Il peut être intéressant de savoir reconnaître les hachures afin de ne pas les coder inutilement. Les hachures présentent en effet quelques caractéristiques: elles sont entourées par un ensemble de lignes connexes (coupe en dessin mécanique), elles ont une inclinaison normalisée, la distance entre chaque droite de hachures est régulière et l'épaisseur des traits de hachure est plus fine que l'épaisseur des traits qui les entourent.

De même, pour ne pas mémoriser tous les traits composant les traits mixtes ou interrompus, on peut les considérer comme formant une seule ligne. Les traits qui les composent ont des longueurs assez régulières et sont distants entre eux d'une quanté constante. On pourra se limiter, pour mémoriser ce type de trait, à mémoriser ses extrémités et quelques données définissant le type de trait.

Enfin, notons que le système selon l'invention est apte à suivre et à échantillonner les symboles, chiffres ou caractères, qui peuvent apparaître dans un plan, ces symboles étant des dessins connexes.

Le système semi-automatique de relevé de plan de l'invention permet donc de résoudre un certain nombre de problèmes rencontrés dans le domaine de relevé de plans.

L'étude locale du dessin, par le suivi des lignes, réduit le volume des données reçues par les moyens de traitement ; l'automatisation maximale du processus diminue le labeur et l'effort demandés à l'utilisateur, dont le rôle reste cependant décisif dans l'interactivité ; la méthode utilisée est invariante par rotation du plan du fait de l'isotropie du capteur; la méthode d'échantillonnage par segmentation angulaire est rapide et adaptative; la possibilité de reconnaître des arcs de cercle et des segments de droite dans des suites de points échantillonnés permet de diminuer encore le volume de données enregistrées.

Dans la description prédédente, on a utilisé un capteur revêtant la forme d'un réseau circulaire. Toutefois, il est possible, sans sortir du cadre de l'invention, de réaliser des systèmes de relevé de plans exploitant des capteurs de formes différentes, tels que réseaux linéaires ou matriciels. Dans le cas des réseaux linéaires, le suivi des lignes du dessin s'effectue en maintenant le réseau perpendiculaire, à chaque instant, à la direction de la ligne à suivre. Dans le cas des réseaux matriciels, on se ramène à une configuration proche de celle d'un réseau circulaire en n'utilisant que les signaux provenant des éléments photosensibles périphériques, les quatre quadrants définis en page 10 étant alors constitués par les quatre côtés d'un réseau carré.

D'autre part, on n'a jusqu'à présent mentionné que le problème du relevé de plans, constitué par un ensemble de lignes contrastées; l'invention s'adapte également au relevé de dessins constitués de taches étendues dont on suit les contours, sous réserve d'une modification de l'exploitation des signaux délivrés par les éléments photosensibles.

## Revendications

1. Système de relevé de plans, du genre de ceux comprenant une table (2) munie d'un capteur plan (5) formé de N éléments photosensibles juxtaposés angulairement de manière à former une courbe fermée, un état dudit capteur étant défini par l'état des éléments photosensibles, d'un moyen (8) pour déplacer le capteur dans un plan parallèle à la table selon deux axes perpendiculaires, et d'un moyen (9) pour mémoriser et transmettre la position du capteur et son état, ladite table recevant un plan (4) à relevé constitué d'un ou plusieurs dessins connexes, ledit système comprenant en outre:
- un moyen (10) de suivi d'une ligne d'un dessin délivrant, au vu de l'état du capteur, des signaux au moyen (8) de déplacement du capteur de manière à centrer ledit capteur sur la ligne suivie,
- un moyen d'analyse (12) pour détecter, au vu de l'état du capteur, les intersections de ligne rencontrées par le capteur et reconnaître lesdites intersections,
- un moyen d'échantillonnage (14) pour mémoriser, selon un critère prédéterminé, les coordonnées de points des lignes de dessins suivies,
- un moyen de commande (16) apte à effectuer des déplacements successifs du capteur d'un pas prédéterminé dans la direction de la ligne suivie, apte à activer successivement, après chaque déplacement du capteur, le moyen (10) de suivi de ligne, le moyen d'analyse (12) et le moyen d'échantillonnage (14), ledit moyen de commande recevant en outre du moyen d'analyse les caractéristiques des lignes reconnues aux intersections et étant apte à commander au capteur de suivre successivement toutes les lignes d'un dessin connexe, des moyens d'un dessin connexe à un autre dessin connexe, ledit système étant caractérisé en ce que le moyen (10) de suivi de ligne est apte, lorsque deux groupes disjoints d'éléments photosensibles sont éteints, à déterminer les angles $(\theta_1, \theta_2)$ entre les rayons issus du centre du capteur et passant par le milieu de chacun desdits groupes et une direction de référence (Ox), à déterminer la pente ($\alpha$) de la ligne suivie et à commander un déplacement du capteur, perpendiculairement à cette pente, pour le centrer sur la ligne suivie, et le moyen d'analyse (12) comparant l'état du capteur à des configurations types délivrées par un moyen (16), pour reconnaître lesdites intersections.

2. Système selon la revendication 1, caractérisé en ce que les N éléments photosensibles du capteur plan (5) sont juxtaposés angulairement de manière à former une circonférence.

3. Système selon l'une quelconque des revendications 1 et 2, dans lequel le capteur est découpé en quatre quadrants $(V_0, V_1, V_2, V_3)$, la bissectrice de deux quadrants opposés $(V_0, V_2)$ étant parallèle à la direction ($\alpha$) de la ligne suivie, caractérisé en ce le moyen d'analyse (12) est apte à commander le balayage de l'intersection par le capteur dans la direction de la ligne suivie, à relever les coordonnées du centre du capteur correspondant au maximum d'éléments photosensibles éteints de chacun desdits deux quadrants, à déduire de ces coordonnées celles de l'intersection, à reconnaître ladite intersection en comparant l'état du capteur à des configurations types et à délivrer au moyen den commande (16) les caractéristiques des lignes détectées aux intersections.

4. Système selon l'une quelconque des revendications 1 à 3, caractérisé en ce que le moyen d'échanntillonnage (14) mémorise les coordonnées d'un point d'une ligne lorsque l'angle entre la tangente à la ligne en ce point et la tangente à la ligne du dernier point échantillonné est supérieur ou égal à un angle prédéterminé $\sigma$.

5. Système selon la revendication 4, caractérisé en ce que l'angle prédéterminé $\sigma$ est l'angle de résolution du capteur.

6. Système selon l'une quelconque des revendications 4 et 5, caractérisé en ce que le moyen d'échantillonnage (14) est apte à reconnaître une ligne élémentaire, au vu d'une suite de points d'échantillonnage, et à transcoder ladite suite de points d'échantillonnage en des données, moins volumineuses, représentatrices de ladite ligne élémentaire.

7. Système selon l'une quelconque des revendications 1 à 6, caractérisé en ce que le moyen de commande (16) est apte à suivre successivement toutes les lignes d'un dessin connexe, dans omission ni répétition.

8. Système selon la revendication 7, caractérisé en ce que le moyen de commande est apte à reconnaître des lignes particulières telles que des hachures et des traits mixtes ou interrompus et à réaliser un codage particulier desdites lignes.

9. Système selon la revendication 7, caractérisé en ce que le moyen de commande (16) ne mémorise, parmi les lignes détectes par le moyen d'analyse (12), que les lignes dont la direction est contenue dans un demi-plan prédéterminé par rapport à un repère lié au capteur.

## Patentansprüche

1. System zum Aufnehmen von Plänen von der Art, welches einen Tisch (2) aufweist, der mit einem ebenen Fühler (5), der von N strahlungsempfindlichen Elementen gebildet ist, die winkelmäßig derart nebeneinander angeordnet sind, daß eine geschlossene Kurve gebildet wird, wobei ein Zustand des genannten Fühlers durch den Zustand der strahlungsempfindlichen Elemente gebildet ist, einer Einrichtung (8) zum Bewegen des Fühlers in einer zu dem Tisch parallelen Ebene längs zweier senkrechter Achsen und einer Einrichtung (9) ausgerüstet ist, um die Stellung des Fühlers und seinen Zustand zu speichern und zu übertragen, wobei der genannte Tisch einen aufzunehmenden Plan (4) aufnimmt, der von einer oder mehreren verbundenen Zeichnungen gebildet ist, wobei das System ferner umfaßt:

- eine Einrichtung (10) zum Folgen einer Linie einer Zeichnung, welche gemäß dem Zustand des Fühlers Signale an die Einrichtung (8) zum Verschieben des Fühlers derart liefert, daß der genannte Fühler auf der gefolgten Linie zentriert wird,

- eine Analyseeinrichtung (12), um entsprechend dem Zustand des Fühlers die von dem Fühler angetroffenen Schnittpunkte der Linie zu erfassen und die genannten Schnittpunkte zu erkennen,

- eine Abtasteinrichtung (14), um gemäß einem vorbestimmten Kriterium die Punktkoordinaten der gefolgten Linien der Zeichnungen zu speichern,

- eine Steuereinrichtung (16), die geeignet ist, die aufeinanderfolgenden Bewegungen des Fühlers mit einem vorbestimmten Schritt in der Richtung der gefolgten Linie durchzuführen, aufeinanderfolgend nach jeder Bewegung des Fühlers die Einrichtung (10) zum folgen der Linie, die Analyseeinrichtung (12) und die Abtasteinrichtung (14) zu aktivieren, wobei die Steuereinrichtung ferner von der Analyseeinrichtung die Merkmale der an den Schnittpunkten erkannten Linien erhält und geeignet ist, den Fühler zu steuern, aufeinanderfolgend allen Linien einer zusammenhängenden Zeichnung zu folgen, sowie zu dem System äußere Mittel, die den Fühler von einer zusammenhängenden Zeichnung zu einer anderen zusammenhängenden Zeichnung bewegen, wobei das System dadurch gekennzeichnet ist, daß die Einrichtung (10) zum Folgen der Linie geeignet ist, wenn zwei nichtverbundene Gruppen von strahlungsempfindlichen Elementen verdunkelt sind, die Winkel $(\theta_1, \theta_2)$ zwischen den von der Mitte des Fühlers ausgehenden und durch die Mitte einer jeden der genannten Gruppen hindurchgehenden Strahlen und einer Bezugsrichtung (Ox) sowie die Steigung ($\alpha$) der gefolgten Linie zu bestimmen und eine Bewegung des Fühlers senkrecht zu dieser Steigung zu befehlen, um ihn auf der gefolgten Linie zu zentrieren, und daß die Analyseeinrichtung (12) den Zustand des Fühlers mit Konfigurationstypen vergleicht, die von einer Einrichtung (18) abgegeben werden, um die genannten Schnittpunkte zu erkennen.

2. System nach Anspruch 1, dadurch gekannzeichnet, daß die N strahlungsempfindlichen Elemente des ebenen Fühlers (5) winkelmäßig derart nebeneinander angeordnet sind, daß ein Umfang gebildet wird.

3. System nach Anspruch 1 oder 2, bei dem der Fühler in vier Quadranten $(V_0, V_1, V_2, V_3)$ unterteilt ist, wobei die Winkelhalbierende von zwei gegenüberliegenden Quadranten $(V_0, V_2)$ zu der Richtung ($\alpha$) der gefolgten Linie parallel ist, dadurch gekennzeichnet, daß mit der Analyseeinrichtung (12) das Abtasten des Schnittpunkts durch den Fühler in der Richtung der gefolgten Linie steuerbar ist, die Koordinaten der Fühlermitte, die höchstens den abgedunkelten, strahlungsempfindlichen Elementen von jedem der genannten zwei Quadranten entsprechen, aufzunehmen, von diesen Koordinaten diejenigen des Schnittpunkts abzuziehen, den genannten Schnittpunkt zu erkennen, indem der Zustand des Fühlers mit den Konfigurationstypen verglichen wird, und der Steuereinrichtung (16) die Merkmale der an den Schnittpunkten erfaßten Linien zu liefern.

4. System nach einem der Ansprüche 1 bis 3, dadurch gekennzeichnet, daß die Abtasteinrichtung (14) die Koordinaten eines Punkts einer Linie speichert, wenn der Winkel zwischen der Tangente an der Linie in diesem Punkt und der Tangente an die Linie des letzten, abgetasteten Punkts größer als ein oder gleich einem vorbestimmten Winkel σ ist.

5. System nach Anspruch 4, dadurch gekennzeichnet, daß der vorbestimmte Winkel σ der Auflösungswinkel des Fühlers ist.

6. System nach Anspruch 4 oder 5, dadurch gekennzeichnet, daß die Abtasteinrichtung (14) geeignet ist, eine Elementarlinie entsprechend einer Folge von Abtastpunkten zu erkennen und die genannte Folge von Abtastpunkten in weniger voluminöse Daten umzusetzen, die für die genannte Elementarlinie repräsentativ sind.

7. System nach einem der Ansprüche 1 bis 6, dadurch gekennzeichnet, daß die Steuereinrichtung (16) geeignet ist, aufeinanderfolgend allen Linien einer zusammenhängenden Zeichnung ohne Auslassung oder Wiederholung zu folgen.

8. System nach Anspruch 7, dadurch gekennzeichnet, daß die Steuereinrichtung geeignet ist, besondere Linien wie Schraffierungen und strichpunktierte oder unterbrochene Linien zu erkennen und eine besondere Codierung der genannten Linien herzustellen.

9. System nach Anspruch 7, dadurch gekennzeichnet, daß die Steuereinrichtung (16) nur von den durch die Analyseeinrichtung (12) erfaßten Linien die Linien speichert, deren Richtung in einer vorbestimmten Halbebene in Bezug auf eine mit dem Fühler verbundene Markierung enthalten ist.

**Claims**

1. Drawing acquisition system, of the type of those including a table (2) provided with a drawing sensor (5) formed from N photosensitive elements angularly juxtaposed in such a way as to form a closed curve, a state of the said sensor being defined by the state of the photosensitive elements, a means (8) of displacing the sensor in a plane parallel with the table according to two perpendicular axes, and a means (9) of storing and transmitting the position of the sensor and its state the said table receiving a drawing (4) to be acquired consititued from one or more connected drawings, the said system also including:

- a means (10) of following a line of a drawing delivering, on seeing the sate of the sensor, signals to the means (8) of displacing the sensor in such a way as to centre the said sensor on the followed line,
- a means of analysis (12) for detecting, on seeing he state of the sensor, the intersections of lines encountered by the sensor and of recognizing the said intersections,
- a means of sampling (14) for storing, according to a predetermined criterion, the coordinates of points of the followed drawing lines,
- a means of control (16) capable of carrying out successive displacements of the sensor in predetermined steps in the direction of the followed line, capable of succesively actuating, after each displacement of the sensor, the means (10) of line following, the means of analysis (12) and the means of sampling (14), the said means of control in addition receiving from the means of analysis the characteristics of the lines recognized at the intersections and being capable of commanding the sensor to successively follow all the lines of a connected drawing, means external to the system for displacing the sensor from one connected drawing to another connected drawing, the said system being characterized in that the means (10) of line following is capable, when two disconnected groups of photosensitive elements are off, of determining the angles $(\theta_1, \theta_2)$ between the radii coming from the centre of the sensor and passing through the middle of each of the said groups and a reference direction (Ox), of determining the slope ($\alpha$) of the followed line and of commanding a displacement of the sensor, perpendicular to this slope, in order to centre it over the followed line, and the means of analysis (12) comparing the state of the sensor with typical configurations delivered by a means (18), in order to recognize the said intersections.

2. System according to Claim 1, characterized in that the N photosensitive elements of the drawing sensor (5) are angularly juxtaposed in such a way as to form a circumference.

3. System according to either of Claims 1 and 2, wherein the sensor is divided into four quadrants $(V_0, V_1, V_2, V_3)$, the bisectrix of two opposite quadrants $(V_0, V_2)$ being parallel to the direction ($\alpha$) of the followed line, characterized in that the means of analysis (12) is capable of commanding the scanning of the intersection by the sensor in the direction of the followed line, of acquiring the coordinates of the centre of the sensor corresponding to a maximum of photo-sensitive elements off in each of the said two quadrants, of deriving from these coordinates those of the intersection, of recognizing the said intersection by comparing the state of the sensor with typical configurations and of delivering to the means of control (16) the characteristics of the lines detected at the intersections.

4. System according to any of Claims 1 to 3, characterized in that the means of sampling (14) stores the coordinates of a point of a line when the angle between the tangent to the line at that point and the tangent to the line at the last point sampled is greater than or equal to a predetermined angle σ.

5. System according to Claim 4, characterized in that the predetermined angle σ is the angle of resolution of the sensor.

6. System according to either of Claims 4 and 5, characterized in that the means of sampling (14) is capable of recognizing an elementary line, on seeing a series of sampling points, and of converting the said series of sampling points into data, smaller in quantity, representing the said elementary line.

7. System according to any of Claims 1 to 6, characterized in that the means of control (16) is capable of successively following all of the lines of a connected drawing, with neither omissions nor repetitions.

8. System according to Claim 7, characterized in that the means of control is capable of recognizing particular lines such as cross-hatching and dotted and dashed or broken lines and of producing a special coding for the said lines.

9. System according to Claim 7, characterized in that the means of control (16) only stores, from among the lines detected by the means of analysis (12), the lines whose direction is contained in a half-drawing predetermined with respect to a reference associated with the sensor.

FIG. 1

FIG. 2

FIG. 3

FIG. 4a

FIG. 4b

FIG. 4c

FIG. 4d

# FIG. 5

# FIG. 6a

# FIG. 6b

# FIG. 7